# EUROPEAN PATENT SPECIFICATION

(11) **EP 4 392 583 B1**
(45) Date of publication and mention of the grant of the patent: **28.10.2026**
(21) Application number: 22769238.1
(22) Date of filing: 26.08.2022
(51) Int. Cl.: C21B 5/06, C21B 13/00, C21B 13/02, F27B 19/02

(54) **METHOD FOR OPERATING A METALLURGICAL PLANT FOR PRODUCING IRON PRODUCTS**
VERFAHREN ZUM BETREIBEN EINER METALLURGISCHEN ANLAGE ZUR HERSTELLUNG VON EISENPRODUKTEN
PROCÉDÉ D'EXPLOITATION D'UNE USINE MÉTALLURGIQUE POUR LA PRODUCTION DE PRODUITS DE FER

(30) Priority: 27.08.2021 LU 500591
(43) Date of publication of application: 03.07.2024
(73) Proprietor: Paul Wurth S.A., 1122 Luxembourg (LU)
(72) Inventor: CASTAGNOLA, Cristiano, 16131 Genova (IT); CRAVINO, Fabio, 16011 Arenzano (IT); ILACQUA, Silvia, 16144 Genova (IT); MAGNANI, Stefano, 16149 Genova (IT); KRULL, Jan, 17019 Varazze (SV) (IT)
(74) Representative: Office Freylinger
(86) International application number: PCT/EP2022/073739
(87) International publication number: WO 2023/025921

(56) References cited:
- EP-B1- 3 202 922
- US-A- 3 954 444
- US-A1- 2004 226 406

## Description

The present invention generally relates to the field of iron metallurgy and in particular to a metallurgical plant and method for producing iron products.

### Background Art

Industrial processes contribute significantly to global CO₂ emissions and the current iron and steel manufacturing process is very energy and carbon intensive. With the Paris Accord and near-global consensus on the need for action on emissions, it is imperative that each industrial sector looks into the development of solutions towards improving energy efficiency and decreasing CO₂ output.

The blast furnace (BF) is historically known for its CO₂ emissions, but still remains today the most widely used process for steel production, this in spite of alternative methods (like scrap melting or direct reduction within an electric arc furnace). Indeed, the gas exiting the blast furnace, known as "top gas", typically comprises a concentration of CO₂ as high as 20 vol% to 30 vol%. Apart from this, the blast furnace gas usually comprises considerable amounts of N₂, CO, H₂O and H₂. The N₂ content, however, largely depends on whether hot air or (pure) oxygen is used for the blast furnace. While, in the early days, this blast furnace top gas may have been allowed to simply escape into the atmosphere, this has long been considered a waste of resources and an undue burden on the environment.

Mainly in order to reduce the amount of coke used, a suggestion was made to recover the blast furnace gas from the blast furnace, treat it to improve its reduction potential and to inject it back into the blast furnace to aid the reduction process. One method for doing this is reducing the CO₂ content in the blast furnace gas by Pressure Swing Adsorption (PSA) or Vacuum Pressure Swing Adsorption (VPSA). PSA/VPSA installations produce a first stream of gas which is rich in CO and H₂ and a second stream of gas rich in CO₂ and H₂O. The first stream of gas can be used as reduction gas and fed back into the blast furnace. One example for this approach is the ULCOS (Ultra Low CO₂ Steelmaking) process, where apart from the recycled first stream of gas, pulverized coal and cold oxygen are fed into the blast furnace. This type of furnace is also referred to as "top gas recycling OBF" (oxygen blast furnace). The second stream of gas can be removed from the installation and, after extraction of the remaining calorific value, disposed of. This disposal controversially consists in pumping the CO₂ rich gas into pockets underground for storage. Furthermore, although PSA/VPSA installations allow a considerable reduction of CO₂ content in the blast furnace gas from about 35 vol% to about 5 vol%, they are very expensive to acquire, to maintain and to operate and they need a lot of space.

Another technology developed to reduce the carbon footprint during iron/steel production is the iron ore direct reduction process. Although annual direct reduced iron production remains small compared to the production of blast furnace pig iron, it is indeed very attractive for its considerably lower CO₂ emissions, which are 40 to 60% lower for the direct reduction electric-arc furnace (EAF) route, compared to the blast furnace - basic oxygen route.

In a direct reduction shaft furnace, a charge of pelletized or lump iron ore is loaded into the top of the furnace and is allowed to descend, by gravity, through a reducing gas. The reducing gas, mainly comprised of hydrogen and carbon monoxide (syngas), flows upwards, through the ore bed. Reduction of the iron oxides occurs in the upper section of the furnace, conventionally at temperatures up to 950°C and even higher. The solid product, called direct reduced iron (DRI) is typically charged hot into Electric Arc Furnaces, or is hot briquetted (to form HBI).

As is known in the art, the DRI and like products are charged in a blast furnace or an ironmaking plant, or a smelting furnace such as an EAF to produce pig iron or steel.

In still another approach intended to reduce blast furnace CO₂ emissions, it has been proposed to introduce hot reducing gas, typically syngas (CO and H₂) produced in a reformer from hydrocarbon gas, directly into the shaft of the blast furnace. There, two possibilities have been proposed: injecting the hot reducing gas via the tuyeres or higher above directly into the shaft of the furnace. This latter option is known as "shaft feeding" and implies the introduction of hot reducing gas (syngas) through the furnace outer wall, above the tuyeres band, i.e. above the bosh, and preferably within the gas solid reduction zone of ferrous oxide above the cohesive zone, generally in the stack area.

It may be noted that in the context of CO₂ emissions reduction, many EU steelmakers are considering the installation of direct reduction plants within the existing metallurgical plants, i.e. comprising blast furnaces and pig iron post treatment installations.

The strategy for such installations is the operation of both direct reduction plants and blast furnaces in parallel, for a number of years, in order to have a transition from oxygen steelmaking, to electric steelmaking. The direct reduction plant may operate with reducing gas obtained through natural gas reforming and H₂ electrolysis operated by means of green electricity. The DRI is charged with scrap in the EAF. The blast furnace is operated in parallel with an iron and coke containing material, and the conventionally produced pig iron is treated in the basic oxygen furnace. Both the blast furnace and EAF produce liquid steel that can be combined for post treatment in the steelworks.

US 2004/0226406 A1 describes an integrated steel works comprising a coke oven, a blast furnace, a blast oxygen furnace BOF and a Direct Reduction Reactor for producing direct reduced iron. The top gas of the direct reduction reactor is passed through a heat exchanger and is divided into partial streams. One portion of the top gas is cooled, washed and dried. The resulting washed-off gas can then be used to control the temperature of the direct reduction reactor. The resulting washed top gas is sent to a compressor and CO₂ absorber, to regenerate the reducing potential of the gas and to form regenerated gas, that is further combined with a gas stream containing coke oven gas and BOF gas. The resulting reducing gas is heated in a heater and sent to the direct reduction reactor. A portion of top gas from the direct reduction plant is used as fuel gas in the coking plant. Another portion of the top gas is used as fuel gas for the blast furnace stoves. That is, a portion of the top gas from the direct reduction plant is burned in the stoves to generate the heat required for heating up the cold blast, turning into hot blast. The blast furnace operates in a conventional manner, being charged with a conventional burden (iron ore, coke etc.). Hot blast is injected through the tuyeres, together with PCI. A portion of blast furnace top gas is sent to the heater upstream of the direct reduction reactor, to be burned as fuel gas.

### Object of the invention

The object of the present invention is to provide an improved approach for the production of iron products, which is in particular more environment friendly.

### Summary of the invention

This object is achieved by a method as claimed in claim 1.

According to the invention, a method for producing iron containing products comprises:
operating a blast furnace plant to produce liquid pig iron from blast furnace charge material, whereby metallurgical gas comprising blast furnace top gas is produced;
operating a direct reduction plant to produce direct reduced iron products from iron ore loaded into the top of a direct reduction furnace, a stream of reducing gas being introduced into said direct reduction furnace, the direct reduction plant comprising a reformer or heater device from which the stream of reducing gas is discharged, whereby top gas (D1) is generated by the direct reduction furnace;
wherein a first stream of direct reduction furnace top gas is treated in an enriching stage configured for enriching this stream in gaseous reducing species, and forwarded to the blast furnace plant to be used therein as reducing gas; and
wherein a first stream of metallurgical gas originating from the blast furnace plant and comprising blast furnace top gas is forwarded to the reformer or heater device of the direct reduction plant to be used therein for heating purposes.

The present invention relies on a synergistic mutual exchange of gases, where "valuable" gases are used for metallurgical purposes, and lean gases are used as fuel.

For example, the valuable top gas of the direct reduction plant may generally be mainly composed of reductant species, typically at least 55 or 60 vol.% of CO and H₂. But it typically also includes 10 v% of CO₂, or more.

The typical blast furnace gas composition may generally comprise 20 to 30 vol% CO₂, about 35 to 50 vol% N₂ and about 20 to 30 vol% CO, H₂ around 5%. These percentages may however change significantly according to process conditions.

Other gases typically used and available in a steelmaking plant are:
Converter gas: 60-70v% CO, 10-20 v% CO₂, 0-5v% H₂, 5-15 v %N₂
Coke oven gas: 5-10 v% CO, 50-55 v% H₂, 20v% CH₄, other higher hydrocarbons less than 10 v% and balance N₂ (very few % CO₂).

These numbers may change significantly according to process conditions.

As it will appear from the present disclosure, the invention proposes an approach that goes against conventional wisdom in the art. Conventionally, a direct reduction plant needs to burn fuels in order to achieve its process scopes: MIDREX^{®} plants operate the MIDREX^{®} reformer in NG plants, a gas heater in MX-Col plants, whereas Energiron/HyL technology requires heating reducing gas. In particular, heating is required to heat up the reducing gas, before introduction into the direct reduction furnace, to a temperature appropriate for the reduction process, typically above 800 °C.

The blast furnace, instead, produces blast furnace top gas, which is a lean gas. When operated on the same site, the direct reduction plant uses a rich gas for combustion purposes, while the blast furnace -or an integrated BF-BOF-, plant produces a significant quantity of lean gas that -according to the present inventor's findings- would suit the combustion purposes of the direct reduction plant.

As used herein, the term blast furnace plant covers a blast furnace but also an integrated blast furnace plant further comprising secondary metallurgy equipment such as a blast oxygen furnace. In embodiments, these other CO-containing export gases, e.g. converter gas, coke oven gas, and/or other CO-containing industrial gas, can be valorized in the present process.

Accordingly, the metallurgical gas stream originating from the blast furnace may be blast furnace top gas (only) or may comprise a mixture of blast furnace top gas together with a certain amount of gas from other equipment, e.g. gas from the BOF (typically less than 50%).

It shall be noted that a direct reduction plant, under standard operation, has a very good balance of gases: there is typically no export gas available. Each Nm³ of gas exported for other uses must be replaced with suitable fuel.

The parallel operation of a blast furnace plant and direct reduction plant on the same location in accordance with the inventive method permits benefiting from a mutual exchange of gases, achieving a coke consumption reduction in the blast furnace. According to first estimations, a reduction in coke consumption of at least 15 to 20% can be expected (depending on the size of both blast furnace and DRI shaft furnace).

Depending on the embodiments, the blast furnace top gas and direct reduction top gas can be split in several streams, for use in different locations in the blast furnace or direct reduction plant.

Conventionally, the blast furnace top gas exiting the blast furnace at the blast furnace plant is preferably cleaned in a top gas cleaning unit before export to the direct reduction plant.

The enriching stage is generally designed to condition / convert the inlet gas stream, in order to obtain an outlet gas stream with a comparatively increased content in gaseous reducing species. This may typically involve mixing the gas stream to be enriched with an additional gas (to react with the gas stream to be enriched; the mixing may occur upstream of the enriching equipment or within the latter). The enriching stage is preferably configured to operate reforming reactions, in particular dry or wet reforming.

The enriching stage preferably includes reformer means (reforming equipment) in order to produce an outlet syngas stream with an enriched content of gaseous reducing species, in particular H₂ and CO. Such reforming stage also typically allows, through reforming reactions, to convert the CO₂ present in the inlet gas mixture. In other words, the enriching stage is configured to allow conversion of CO₂ into CO and H₂, whereby the CO₂ content of the top gas from the direct reduction plant is substantially reduced (e.g. to less than 5 v.%) when passing through the enriching stage.

In embodiments, a second stream of blast furnace top gas (and/ or converter gas, and or coke oven gas, and/ or another portion of another gas typically used in industry) is used as fuel gas in the enriching stage.

In the context of the present disclosure, the expression "used as fuel gas" means that the respective gas stream is combusted (burned) to generate heat. This is the gas at a heater to generate a flame that will be used for heating a piping containing a gas stream to be heated-up. Likewise, the expression 'for heating purposes' means that the respective gas stream is used for its heating power, either by thermal exchange, or by burning (i.e. as fuel gas).

Furthermore, the expression 'used as reducing gas' means that the respective gas stream is introduced into the furnace (blast furnace or DR plant furnace) to react with the charge and operate the reduction of the iron ore, respectively iron oxides.

In embodiments, the first stream of metallurgical gas (i.e. blast furnace top gas possibly mixed with converter gas, and or coke oven gas, and or another portion of another gas typically used in industry) is heated up in a pre-heater upstream of the reformer or heater device in the direct reduction plant. There, a third stream of metallurgical gas may be combusted in the pre-heater.

As indicated before, the first, second or third stream of metallurgical gas may contain only BF top gas or include a mixture of blast furnaces top gas (i.e. throat gas) together with one or more other CO-containing gases, e.g. converter gas, coke oven gas, and/or other CO-containing industrial gas. Preferably, the metallurgical gas comprises at least 30% of blast furnace top gas.

Conventionally, the direct reduction plant recycles the top gas exiting the direct reduction furnace. A second top gas stream of the direct reduction furnace is injected in the reformer/heater device, with hydrocarbon gas to form/condition the reducing gas stream that is re-introduced into the direct reduction furnace. Further, a third top gas stream of the direct reduction furnace is used as fuel gas in the reformer-heater device. The hydrocarbon gas used in the reformer-heater device may be natural gas or other suitable hydrocarbon gas adapted for converting CO₂, H₂O and CH₄ into CO and H₂.

Advantageously, a portion of the first stream of direct reduction furnace top gas can be combined with hydrocarbon gas (e.g. natural gas, coke oven gas, other suitable hydrocarbons) to form a syngas, which is introduced into the blast furnace upon treatment in the enriching stage (typically by reforming reactions). A noticeable benefit of this approach is to be able to deal with the CO₂ contained in the syngas by making use of it (i.e. via enriching stage based on reforming), instead of having to remove the CO₂ from the gas stream.

In embodiments, the hydrocarbon quoted above is coke oven gas, in order to exploit a gas available in the steelmaking background.

The coke oven gas has typically a high content of H₂ and CH₄. When mixed with direct reduction top gas, the obtained syngas stream contains a large majority of reducing species, e.g. mainly H₂, together with CH₄ and CO. The total of H₂, CH₄ and CO may represent more than 65, 70 or 75 vol%.

Upon reforming in the reforming stage, this gas stream will typically include above 80% of reducing species. For example, the H₂ content may be above 55 vol% and the CO content above 25 vol%.

The present invention also concerns a metallurgical plant as claimed in claim 17.

The above and other embodiments are recited in the appended dependent claims.

As it will be appreciated, the present invention proposes an advantageous approach with:
1) A solution to balance the exchange of gases from the blast furnace plant to the direct reduction plant;
2) A solution that optimizes the use of gases, pushing rich gas for metallurgical purposes, and lean gas for combustion purposes;
3) A solution to use the CO₂ of the syngas (before injection into the blast furnace) to be enriched in reduction species (by reforming reactions) using hydrocarbons, instead of removing it;
4) A solution to export lean BF gas to be used in the DR process, without any particular treatment (unless heating, mixing with gas, or burning with some oxygen addition).

### Detailed description of preferred embodiments

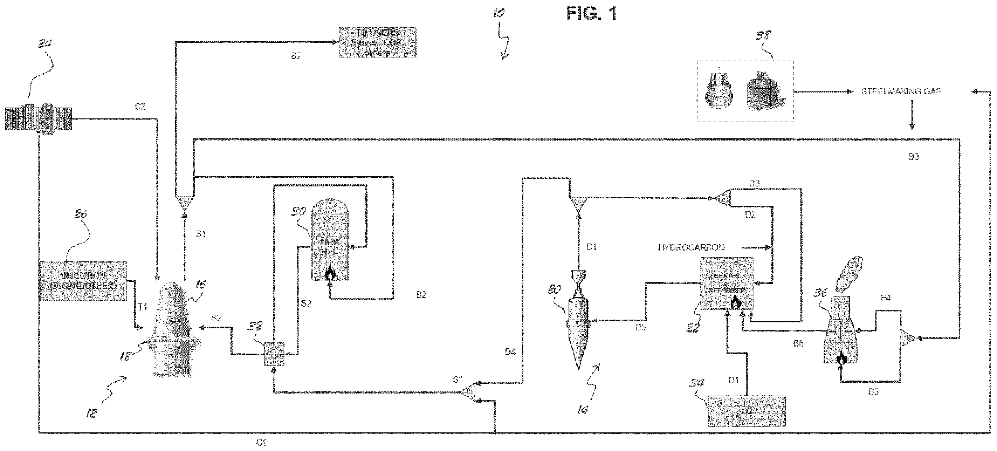

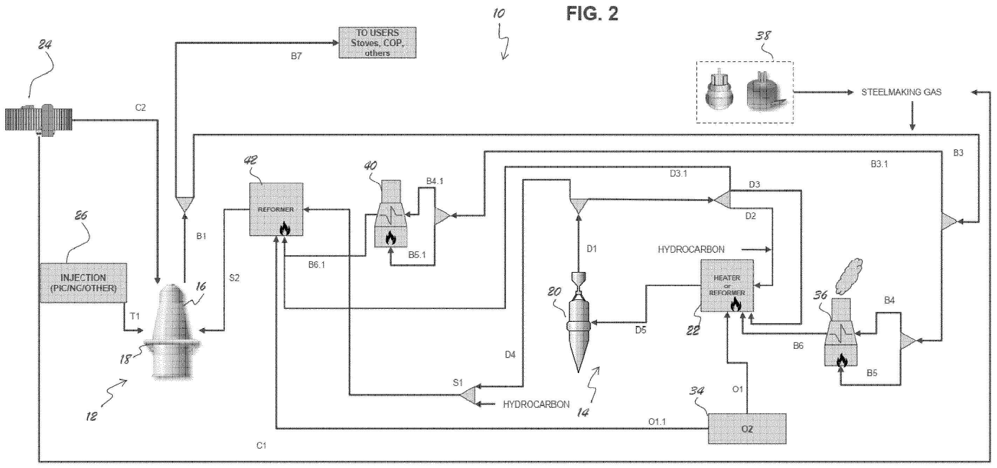

Further details and advantages of the present invention will be apparent from the following detailed description of not limiting embodiments with reference to the following figures, where Figs. 1 and 2 are applicable diagrams illustrating two embodiments of a metallurgical plant 10 for implementing the present method.

Metallurgical plant 10 comprises (although not limited to) the following: at least one blast furnace plant 12 and at least one direct reduction plant 14.

Conventionally, the metallurgical plant 10 may further include:
- coke oven plant(s) 24;
- a plant for tuyere injection 26: this plant generates a medium to be injected into the the bast furnace via the tuyeres. The most common medium is pulverized coal (PCI), but can also be natural gas (NG).
- steelmaking facilities (38).

The blast furnace plant 12 conventionally includes, next to the blast furnace 16 itself, a number of conventional components (i.e. hot stoves, stockhouse, etc.), but only the furnace 16 is shown in the figure. As it is known, the furnace 16 is fed from the top with charge material (iron bearings, coke and fluxes). For this purpose, a top charging installation (not shown), e.g. of the BELL LESS TOP ^{®} type, is arranged above the furnace top and serves the function of distributing blast furnace raw materials into the furnace. A hot blast of air (or hot wind) is introduced into the furnace 16 via tuyeres circumferentially distributed around the furnace 16 and connected to a peripheral/annular bustle pipe 18.

The end products are molten pig iron and slag tapped from the bottom, and waste gases exiting from the top of the furnace 16, referred to as top gas.

The blast furnace is a counter-current reactor: the downward flow of the ore along with the fluxes is in contact with the upflow of hot, carbon monoxide-rich gas. The blast furnace top gas (discharged via the blast furnace throat), generated by the blast furnace operation, is noted B1. In a conventionally operated blast furnace, the top gas is a lean gas, generally containing 20 to 30 vol% CO₂, about 35 to 50 vol% N₂ and about 20 to 30 vol% CO and H₂ around 5%.

Top gas stream B1 exiting the blast furnace 16 is typically cleaned in a gas cleaning unit (not shown).

The blast furnace plant 12 generates in its operating process blast furnace top gas in the blast furnace 16, but also other CO-containing gas originating from other equipment, e.g. from the coke oven batteries or basic oxygen furnace.

The direct reduction plant 14 is of conventional design. It comprises a vertical shaft furnace 20 with a top inlet and a bottom outlet. A charge of iron ore, in lump and/or pelletized form, is loaded into the top of the furnace 20 and is allowed to descend, by gravity, through a reducing gas. The charge remains in the solid state during travel from inlet to outlet. The reducing gas, noted D5, is introduced laterally in the furnace 20, at the basis of the reduction section, flowing upwards, through the ore bed. Reduction of the iron oxides occurs in the upper section of the furnace, at temperatures up to 950°C and higher.

The solid product -direct reduced iron (DRI)- is typically discharged hot from the furnace 20 and can then be: charged hot into a downstream steelmaking facility (e.g. electric arc furnace); hot briquetted to form HBI; cooled in a separate vessel as Cold DRI; or a combination of these options.

As regards direct reduction processes, it may be noted that mainly two processes are widespread globally to produce DRI in the various shapes described above: MIDREX^{®} NG and HyL.

In the MIDREX process, the reducing gas stream D5 originates from a reformer device 22 of the direct reduction plant 14, where part of the top gas exiting the furnace 20 is combined with hydrocarbon gas (e.g. natural gas) to produce CO and H₂, as is known in the art. The reformer device 22 preferably implements a reforming process mainly according to the reactions (not limited to these):

CH₄ + CO₂ → 2CO + H₂ (Eq.1)

CH₄ + H₂O → CO + 3H₂ (Eq.2)

CO + H₂O → CO2 + H₂ (Eq.3)

In the MIDREX^{®} NG process, the reformer device 22 is typically provided with an integrated heat recovery system, as is known to those skilled in the art.

The reformer device comprises a reactor wherein the reforming reactions occur. As these reactions are endothermic, the reactor is heated in heat-exchange relationship with combustion gases (generated by an integrated burner) and/or hot gases (external gas). The integrated heat recovery system typically comprises heat exchange means configured to heat up one or more gas streams on their way to the reformer, with hot gas from the DR plant, in particular with flue gas from the reformer device.

In the HyL process instead, two possibilities are there:
1) hydrocarbons are reformed into a steam reformer to a gas with varying content of CO, H₂, and CH₄, and subsequently heated into a heater before injection in the shaft furnace
2) Hydrocarbons are added to the process w/o reforming,

Hence, as will be understood by a person skilled in the art, reference sign 22 in Fig.1 (and Fig.2) either designates a MIDREX reformer or a HyL steam reformer and/or heater, depending on which technology is implemented. That is, reference sign 22 may be a reformer (of any appropriate kind, in particular MIDREX, HyL) or a heater (where no reforming is required before introduction into the furnace). Reference sign 24 designates a coke oven plant, where reference C1 designates a stream of coke oven gas (COG) and reference C2 indicates the coke produced therein. The COG stream C1 is a reducing gas, including e.g. at least 60 or 70 vol% of reducing species, mainly H₂ (>50v%) and CH₄.

Reference sign 38 represents the steelmaking facility, that can include a Basic Oxygen Furnaces (BOF), an Electric Arc Furnaces (EAF) and/or other similar furnaces, well known in the steelmaking industry. As indicated in the drawings, gas generated at one of these furnaces or pieces of equipment may be combined with blast furnace top gas for use in the direct reduction plant. As used herein, 'metallurgical gas' hence designates a gas flow that originates from the blast furnace plant and contains either BF top gas alone, or a mixture of BF top gas and another CO-containing gas from the BF plant, in particular from facility 38 and/or from the coke oven 24.

Reference sign 26 finally designates a plant for injection in blast furnace. One of the most common system is the pulverized coal injection (PCI) system comprising conveying hoppers and/or distribution hoppers for temporary storing the pulverized or granular coal or carbonaceous material that is connected via dedicated piping to the tuyeres band of the blast furnace. The stream of pulverized coal is indicated T1. Injection of pulverized coal is beneficial in that it decreases the overall cost of produced hot metal, not only through the replacement of coke, but also through an increased productivity and the possibility of a prompt control of the blast furnace operation.

Coke oven plant 24 and system 26 can be of conventional design.

When operated in parallel, the two plants produce iron products, namely liquid pig iron and solid iron products. The DRI can be molten in an EAF and mixed with the pig iron, and the mixture subjected to second metallurgy in the steelworks.

As indicated above, in the current frame of CO₂ emission reduction, many EU steelmakers are considering the installation of direct reduction plants within the existing integrated steelworks. The strategy for such installations is the operation of both direct reduction plants and blast furnaces, for a number of years, in order to have a transition from oxygen steelmaking, to electric steelmaking.

The present invention proposes an approach combining a direct reduction plant with a blast furnace plant, in order to achieve coke consumption reduction in the blast furnace. The invention proposes a synergistic mutual exchange of gases, where "valuable" gases are used for metallurgical purposes, and lean gas is used as fuel.

When operated alone, a direct reduction plant needs to burn fuels (generate heat) in order to achieve its process scopes (MIDREX plants must operate the reformer, Energiron/HyL processes require heating the reducing gas).

When operated on the same site, the direct reduction plant uses a rich gas for combustion purposes, while the blast furnace plant produces a significant quantity of lean gas that -according to the present inventor's findings- would suit the combustion purposes of the direct reduction plant.

It shall be noted that a direct reduction plant, under standard operation, has a very good balance of gases: there is typically no export gas available. Each Nm3 of gas exported for other uses must be replaced with suitable fuel.

The joint operation of a blast furnace plant and direct reduction plant on the same location in accordance with the inventive method permits benefiting from a mutual exchange of gases, achieving a coke consumption reduction in the blast furnace.

This will now be explained here below.

### EMBODIMENT 1

In the embodiment of Fig.1, the flow of top gas, noted D1, exiting the furnace 20 of the direct reduction plant 14 is split into several streams:
- a first stream D2 recirculated as reducing gas into the direct reduction furnace 20, after treatment in the reformer-/heater device 22, also fed with hydrocarbon gas such as e.g. natural gas or equivalent;
- a second stream D3 sent to the reformer/heater to be used as fuel gas to treat and heat up the D2/D5 stream. This stream D3 may be combusted to provide heat to enable reforming reactions of D2/D5, heat may simply be extracted by heat exchange to heat up D2/D5;
- a third stream D4 that forms an export gas stream to be valorized in the blast furnace plant.

The top gas of the direct reduction furnace is a rich, mainly reductant gas, with typically at least 55 or 60 vol.% of reducing species, namely CO and H₂. This is case for streams D1, D2, D3 and D4. The H₂ content may lie between about 40 to 50 vol%.

The two first streams D2 and D3 are conventional. It is indeed usual in a direct reduction plant to recycle the direct reduction furnace top gas partly as process gas combined with hydrocarbon gas (e.g. methane) in device 22 to produce syngas, while the other part of the top gas is used in the heating part to produce heat by combustion for heating the device 22. Indeed, in the MIDREX configuration, direct reduction top gas is recycled in the reformer to form syngas, but also directed to the heater side of the reformer where it is burnt.

In the present process however, part of the direct reduction furnace top gas, i.e. the stream D4, is branched off and mixed with coke oven gas C1 (or other hydrocarbon gas source), to create a syngas S1. Stream S1 is rich in reducing species but contains a non-negligible proportion of CO₂ (above 10 vol%) originating from the direct reduction furnace 20. The stream S1 is fed into to an enriching equipment 30 including reforming equipment, where it undergoes reforming reactions with the hydrocarbon gas contained in S1 (e.g. natural gas, coke oven gas), to convert CO₂ H₂O and CH₄ into CO and H₂ (similar to Eq.1, Eq.2, Eq.3). At the exit of the reforming equipment 30, the output stream S2 is enriched with reducing species, namely H₂ and CO, and has suitable chemical composition (strongly reducing) be injected into the blast furnace 12. Preferably, a heat-exchanger 32 is used to heat up stream S1 before entering the dry reforming equipment 30, by exchanging heat with stream S2. Stream S2, after the heat exchanger, still has suitable temperature for injection in the blast furnace. In the heat exchanger S2 simply gives up heat, its chemical composition is not modified.

In this case, due to the nature of the dry reforming process, flue gases are leaving the equipment 30 at high temperatures (i.e. approx. 700°C) such heat can be exploited to heat up stream B4 (by heat exchange - thus saving B5 consumption). Stream S1 contains a large majority of reducing species, e.g. mainly H₂, together with CH₄ and CO. The total of H₂, CH₄ and CO may represent more than 65, 70 or 75 vol%.

Stream S2 has a further reducing strength, with a total of reducing species above 80%. For example, the H₂ content may be above 55 vol% and the CO content above 25 vol%.

As indicated above, a conventionally operated direct reduction plant is well-balanced and there is no export gas.

It will be noted that branching off part of the direct reduction furnace top gas, via stream D4 used to generate the syngas S1/S2 for the blast furnace plant 12, requires replacing the heat content of D4 in the direct reduction plant 14. This is achieved through replacement with blast furnace gas, namely by way of stream B6. That is B6 is a stream of metallurgical gas that is used as fuel gas in the DR plant, i.e. combusted to generate heat for the DR process.

Since stream B6 may have an inherent lower heating value than stream D4, it may be required to burn B6 by using an air/oxygen mixture (stream O1 from oxygen source 34), or by using additional fuels.

Additionally, it may be required to preheat stream B6 before being used in device 22.

The flow of blast furnace top gas exiting the top of blast furnace 16 is split into several streams:
- a first stream B2 that is sent to the reforming equipment 30 and used therein as a fuel (i.e. burnt with a burner) to enable/sustain the reforming reactions;
- a second stream B3 that is sent to the direct reduction plant 14, in order to replace stream D4 exported to the blast furnace. B3 then is, in turn split into:
   ∘ stream B5 that can be burnt in the pre-heater 36, in order to suitably heat up stream B4 (if required);
   ∘ stream B4/B6 that is combusted in the heater part of device 22 after having been optionally heated-up in pre-heater 36,
- a stream B7, which is exported to various users.

It should be noticed that in standard blast furnace operation, streams B2, B3, B4, B5 and B6 do not exist.

### EMBODIMENT 2

Turning to Fig. 2, a second embodiment is shown, which differs from Embodiment 1 in the way of treating the stream of syngas S1. The reformer stage 30 and heat exchanger 32 are replaced by another reforming device 42 and a heater 40.

As will be understood by those skilled in the art, device 40 is a heater similar in type to device 36 of Embodiment 1.

Reformer device 42 is similar to a MIDREX^{®} reformer in that it comprises a reformer and integrated heat recovery system.

The syngas S2 in this embodiment is created only by mixing stream D4 with suitable quantity of Hydrocarbons (i.e. Natural Gas).

Fuel for device 42 burners (i.e. stream B3.1) is created in the same fashion as stream B3 for Embodiment 1: by using blast furnace top gas.

It may be required to preheat stream B3.1 (into B6.1) by burning a portion (B5.1) in device 40. This is in practice the same concept explained for device 36 in Embodiment 1.

Since stream B6.1 may have an inherent low heating value, it may be required to burn B6.1 by using an air/oxygen mixture (stream O1.1 from oxygen source 34), or by using additional fuels.

As indicated above, streams B3, B3.1 B4, B4.1, B5, B5.1, B6 and B6.1 may be referred to as metallurgical gas and, depending on the embodiment may be based on the initial 100% BF top gas stream B3, or on a mixture of BF top gas stream and additional gas such as CO-containing gas from steelmaking facility 38 and/or from the coke oven 24.

It may be noted that the reforming stage (using a reformer 42 and heater 40) at the blast furnace plant and the reformer 22 with heater 36 at the direct reduction plant are, functionally, equivalent. Hence in some embodiments (not shown) one could, so to speak, merge the two equipment. In other words, one could design a large reformer and heater system that could process the DR top gas to be sent to the DR furnace and to the blast furnace.

### EXAMPLE CALCULATIONS

Following data are referring to a specific case study, analyzed, using EMBODIMENT 1 configuration.

For the sake of exemplification, exemplary compositions of the various streams are given in table 1.

**Table 1**

| | **BF Top Gas (Bx)** | **Top gas fuel (Dx)** | **COG (C1)** | **Syngas S1** | **Reformed syngas S2** |
|---|---|---|---|---|---|
| CO [% wet basis] | 22.2 | 24 | 6 | 17.7 | 28.7 |
| CO2 [% wet basis] | 21.2 | 20 | 2.8 | 13.9 | 5.4 |
| CH4 [% wet basis] | - | 4 | 22 | 10.3 | 2.2 |
| H2 [% wet basis] | 8.5 | 47 | 55 | 49.5 | 56.2 |
| H2O [% wet basis] | 9.5 | 3 | 3 | 3 | 2.6 |
| N2 [% wet basis] | 38.6 | 2 | 8.2 | 4.2 | 3.3 |
| | | | | | 1.2 other H-C |

### Example 1

Simulations have been carried out and approximate numbers are given below for an example where the blast furnace produces approx. 8MTPY, and the direct reduction plant approx. 3.7 MTPY.
B1 = 1500 Nm³/t HM (Nm³ per ton of hot metal)
B2 = 350 Nm³/t HM
B3 = 560 Nm3/t HM
B7 = 640 Nm³/t HM
D4 = 142 Nm³/t HM (300 Nm³/t of DRI or HBI)
C1 = 75 Nm³/t HM
O1 = 35 Nm³/t HM (75Nm³/t of DRI or HBI)
S2 = 250 Nm³/t HM, 950°C at BF injection
C2 = 228 kg/t HM
T1 = 198 kg/t HM

Compared to a case where a blast furnace and direct reduction furnace are operated independently, without any gas exchange, and for the same throughput (8 MTPY BF and 3.7 DR plants) the following variations can be observed.
T1 - NOT CHANGED
C2 -consumption reduced by 47 kg/tHM (0.37 MTPY) in example 1
C1 - increased consumption by 75 Nm³/tHM
B7 - reduced export by 730 Nm³/tHM
O1 - increased consumption by 35 Nm³/tHM

As can be seen, the present inventive process allows a reduction of about 16% of coke consumption.

### Use of enriched top gas.

In the present method, the blast furnace gas stream B3 can be mixed with other gases such as e.g. converter gas, coke oven gas, and/or other CO-containing industrial gas.

That is, blast furnace top gas (i.e. throat gas) can be mixed with other gases from the ironmaking installation. The use of a mixed blast furnace gas may require adapting other process parameters, e.g. injecting oxygen. However, as illustrated by table 2, the mixing of blast furnace top gas with other gases in various proportions does permit valorizing these alternate gas sources while still maintain the proper heat balance of the reformer.

**Table 2**

| | Fuel Gas Mix Composition | | | | | |
|---|---|---|---|---|---|---|
| CASE | % Top Gas Fuel | % BF Gas | % COG | % BOF Gas | % Natural Gas | Fuel Gas Mix consumption [Nm3/t DRI] |
| Standard NG Operation | 98 | 0 | 0 | 0 | 2 | 491 |
| 30% replacement | 63 | 34 | 0 | 0 | 3 | 648 |
| 80% Replacement | 19.7 | 78.5 | 0 | 0 | 1.8 | 1102 |
| Full BFG Replacement | 0.0 | 98.6 | 0 | 0 | 1.4 | 1441.1 |
| Gas Mix replacement | 4 | 79 | 7 | 11 | 0 | 1096 |

In table 2, BFG stands for blast furnace top gas (throat gas), COG is coke oven gas, BOF stands for basic oxygen furnace gas and TGF stands for Direct redcution top gas fuel. For all compositions of table 2, the same flame temperature, i.e. heat balance in the reformed, is achieved.

As can be seen, in such cases where blast furnace top gas is mixed with other gases, the BFG portion may be reduced as low as 20% and it is still possible to achieve the desired heat balance.

### Example 2

Example 2 relates to embodiment 2 described with reference to Fig.2.

In table 3 below, the inventive approach of embodiment 2, noted invention, is compared to a counter example. Counter example represents the conventional practice where the blast furnace plant and direct reduction plant are operated in parallel, independently.

**Table 3**

| | **Counter example** | **Invention** |
|---|---|---|
| Coal + PCI (kg/t HM) | 437 | 384 |
| Electrical import (kWh/t HM) | 241 | 728 |
| Natural gas (GJ/t HM) | 5.96 | 5.30 |
| CO₂ emissions (kg/t HM) | 1667 | 1493 |

As can be seen, the inventive process with synergistic exchange of gases between the blast furnace plant and direct reduction plant requires less coal per ton of hot metal (compensated by electrical import) and results in about 11% reduction in CO₂ emissions.

## Claims

1. A method for producing iron containing products, comprising:
operating a blast furnace plant (12) to produce liquid pig iron from blast furnace charge material, whereby metallurgical gas comprising blast furnace top gas (B1) is generated;
operating a direct reduction plant (14) to produce direct reduced iron products from iron ore loaded into the top of a direct reduction furnace (20), a stream of reducing gas (D5) being introduced into said direct reduction furnace, said direct reduction plant comprising a reformer or heater device (22) from which said stream of reducing gas (D5) is discharged, whereby top gas (D1) is generated by said direct reduction furnace;
wherein a first stream (D4) of direct reduction plant top gas is treated in an enriching stage (30; 42, 40) configured for enriching in gaseous reducing species, and forwarded to said blast furnace plant to be used therein as reducing gas; and
wherein a first stream of said metallurgical gas (B3/B6) is forwarded to said reformer or heater device of said direct reduction plant to be used therein as fuel gas.

2. The method according to claim 1, wherein a second stream (B2) of said metallurgical gas is used as fuel gas in said enriching stage.

3. The method according to claim 1 or 2, wherein said first stream (B3) of metallurgical gas is heated up in a pre-heater (36) upstream of said reformer or heater device (22); and preferably wherein a third stream (B5) of said metallurgical gas is combusted in said pre-heater.

4. The method according to any one of the preceding claims, wherein the enriched stream used as reducing gas in said blast furnace is injected via tuyeres or directly into a stack region; and/or a second top gas stream (D2) of said direct reduction furnace is fed to said reformer or heater device (22), with hydrocarbon gas, to form said reducing gas stream (D5) introduced in said direct reduction furnace; and/or wherein a third top gas stream (D3) of said direct reduction furnace is used as fuel gas in said reformer or heater device.

5. The method according to any one of the preceding claims, wherein said first stream (D4) of direct reduction furnace top gas is combined with hydrocarbon gas upstream of said enriching stage to form a syngas stream (S1), which is fed to said enriching stage, the outlet syngas stream (S2) thereof being introduced into said blast furnace, the enriching stage preferably including reformer means; preferably wherein said hydrocarbon stream combined with said direct reduction top gas stream (D4) comprises coke oven gas; more preferably wherein said syngas stream (S1) comprises 45 to 55 vol.% H2, 15 to 25% vol.% CO and 7 to 15 vol.% CH4; and said outlet stream (S2) comprises above 55 vol.% H2 and above 25 vol.% CO.

6. The method according to any one of the preceding claims, wherein said preheating of said syngas stream (S1) is achieved by heat exchange with the outlet syngas stream downstream of said enriching stage; and/or wherein said enriching stage is configured to operate reforming reactions, in particular dry or wet reforming; and/or
wherein said enriching stage comprises a reformer with an integrated heat recovery system, and a fourth stream of said metallurgical gas, possibly with a stream of direct reduction plant top gas, is fed to the heat recovery system, optionally with an additional hydrogen stream;
preferably wherein a heater is associated with said reformer stage; and wherein said fourth stream of metallurgical gas is preheated in said heater, a part thereof being optionally burned in said heater.

7. The method according to any one of the preceding claims, wherein an oxygen rich stream is fed to said reformer or heater device for combustion; and/or wherein said reformer device (22) comprises an integrated heat recovery system fed with blast furnace gas.

8. The method according to any one of the preceding claims, wherein said metallurgical gas consists of blast furnace top gas; or of blast furnace top gas mixed with other CO-containing gas from the blast furnace plant, in particular coke oven gas or basic oxygen furnace gas.

9. The method according to any one of the preceding claims, wherein flues of said enriching stage are forwarded to the pre-heater (36) for heating purposes.

10. A metallurgical plant comprising:
a blast furnace (16) plant for producing pig iron, said blast furnace plant generating metallurgical gas including blast furnace top gas (B1);
a direct reduction plant (14) comprising a direct reduction furnace (20) configured for producing direct reduced iron products from iron ore and a reformer or heater device (22) for generating reducing gas introduced into said direct reduction furnace, said direct reduction furnace generating a top gas (D1);
a first piping for carrying a first stream (B3) of said metallurgical gas to said direct reduction plant for use therein as fuel gas in said reformer or heater device;
a second piping for carrying a first stream (D4) of top gas from said direct reduction furnace to an enriching stage configured for enriching in reducing species, and a third piping for carrying the resulting enriched stream (S2) from said enriching stage to said blast furnace plant to be used as process gas.

11. The metallurgical plant according to claim 10, comprising means for injecting said enriched stream (S2) into said blast furnace, via tuyeres or directly into a stack region.

12. The metallurgical plant according to claim 10 or 11, wherein said first stream (D4) of top gas from said direct reduction furnace is mixed with hydrocarbon gas upstream of said enriching stage to form a syngas stream (S1); preferably wherein said syngas stream is passed through a heat exchanger to be heated up by the enriched stream (S2) exiting said enriching stage.

13. The metallurgical plant according to any one of claims 10 to 12, wherein said first stream (B3) of said metallurgical gas is heated up in a preheater (36) before being combusted in said reformer or heater device; and/or wherein a second stream (B2) of said metallurgical gas is used as fuel gas in said enriching stage; and/or wherein a third stream (B5) of said metallurgical gas is burnt in said preheater (36).

14. The metallurgical plant according to any one of claims 10 to 13, wherein said direct reduction plant is configured such that a second stream of top gas is treated in said reformer or heater device before being recycled in the furnace and a third stream of top gas is combusted in the reformer or heater device.

15. The metallurgical plant according to any one of claims 10 to 14, wherein said enriching stage includes reformer means, preferably configured to operate dry or wet reforming reactions, and in particular configured to enrich the first stream (D4) with reducing species by reforming reactions with hydrocarbon, namely increasing the H2 and CO content.

## Patentansprüche

1. Verfahren zur Herstellung von Eisen enthaltenden Produkten, umfassend:
Betreiben einer Hochofenanlage (12), um flüssiges Roheisen aus Beschickungsmaterial des Hochofens herzustellen, wodurch metallurgisches Gas, das Gichtgas (B1) umfasst, erzeugt wird,
Betreiben einer Direktreduktionsanlage (14), um direkt reduzierte Eisenprodukte aus Eisenerz herzustellen, das in die Gicht eines Direktreduktionsofens (20) geladen wurde, wobei ein Strom von Reduktionsgas (D5) in den Direktreduktionsofen eingebracht wird, wobei die Direktreduktionsanlage einen Reformer oder eine Heizungsvorrichtung (22) umfasst, aus dem/der der Strom von Reduktionsgas (D5) entladen wird, wobei durch den Direktreduktionsofen Gichtgas (D1) erzeugt wird,
wobei ein erster Strom (D4) von Gichtgas der Direktreduktionsanlage in einer Anreicherungsstufe (30; 42, 40) behandelt wird, die zur Anreicherung in gasförmigen Reduktionsspezies konfiguriert ist, und in die Hochofenanlage weitergeleitet wird, um dort als Reduktionsgas verwendet zu werden; und
wobei ein erster Strom des metallurgischen Gases (B3/B6) in den Reformer oder die Heizungsvorrichtung der Direktreduktionsanlage weitergeleitet wird, um dort als Brenngas verwendet zu werden.

2. Verfahren nach Anspruch 1, wobei ein zweiter Strom (B2) des metallurgischen Gases als Brenngas in der Anreicherungsstufe verwendet wird.

3. Verfahren nach Anspruch 1 oder 2, wobei der erste Strom (B3) von metallurgischem Gas in einer Vorheizung (36) stromaufwärts des Reformers oder der Heizungsvorrichtung (22) aufgeheizt wird; und vorzugsweise wobei ein dritter Strom (B5) des metallurgischen Gases in der Vorheizung verbrannt wird.

4. Verfahren nach einem der vorhergehenden Ansprüche, wobei der als Reduktionsgas in dem Hochofen verwendete angereicherte Strom über Winddüsen oder direkt in einen Schachtbereich eingespritzt wird; und/oder ein zweiter Gichtgasstrom (D2) des Direktreduktionsofens dem Reformer oder der Heizungsvorrichtung (22) mit Kohlenwasserstoffgas zugeführt wird, um den Reduktionsgasstrom (D5) zu bilden, der in den Direktreduktionsofen eingebracht wird; und/oder wobei ein dritter Gichtgasstrom (D3) des Direktreduktionsofens als Brenngas in dem Reformofen oder der Heizungsvorrichtung verwendet wird.

5. Verfahren nach einem der vorhergehenden Ansprüche, wobei der erste Strom (D4) von Gichtgas des Direktreduktionsofens mit Kohlenwasserstoffgas stromaufwärts der Anreicherungsstufe kombiniert wird, um einen Synthesegasstrom (S1) zu bilden, der der Anreicherungsstufe zugeführt wird, wobei dessen Auslasssynthesegasstrom (S2) in den Hochofen eingebracht wird, wobei die Anreicherungsstufe vorzugsweise Reformmittel einschließt; vorzugsweise wobei der Kohlenwasserstoffstrom, der mit dem Direktreduktionsgichtgasstrom (D4) kombiniert ist, Koksofengas umfasst; stärker bevorzugt wobei der Synthesegasstrom (S1) 45 bis 55 Vol.-% H2, 15 bis 25 Vol.-% CO und 7 bis 15 Vol.-% CH4 umfasst; und wobei der Auslassstrom (S2) über 55 Vol.-% H2 und über 25 Vol.-% CO umfasst.

6. Verfahren nach einem der vorhergehenden Ansprüche, wobei das Vorheizen des Synthesegasstroms (S1) durch Wärmeaustausch mit dem Auslasssynthesegasstrom stromabwärts der Anreicherungsstufe erreicht wird; und/oder wobei die Anreicherungsstufe konfiguriert ist, um Reformreaktionen zu betreiben, insbesondere eine trockene oder nasse Reformierung; und/oder
wobei die Anreicherungsstufe einen Reformer mit einem integrierten Wärmerückgewinnungssystem umfasst und ein vierter Strom des metallurgischen Gases, möglicherweise mit einem Strom von Gichtgas aus der Direktreduktionsanlage, dem Wärmerückgewinnungssystem gegebenenfalls mit einem zusätzlichen Wasserstoffstrom zugeführt wird; vorzugsweise wobei eine Heizung der Reformofenstufe zugeordnet ist; und wobei der vierte Strom von metallurgischem Gas in der Heizung vorgeheizt wird, wobei ein Teil davon gegebenenfalls in der Heizung verbrannt wird.

7. Verfahren nach einem der vorhergehenden Ansprüche, wobei ein an Sauerstoff reicher Strom dem Reformer oder der Heizungsvorrichtung zur Verbrennung zugeführt wird; und/oder wobei der Reformer (22) ein integriertes Wärmerückgewinnungssystem umfasst, das mit Hochofengas versorgt wird.

8. Verfahren nach einem der vorhergehenden Ansprüche, wobei das metallurgische Gas aus Gichtgas besteht; oder aus Gichtgas gemischt mit einem anderen, CO-haltigen Gas aus der Hochofenanlage, insbesondere Koksofengas oder Sauerstoff-Aufblas-Konvertergas.

9. Verfahren nach einem der vorhergehenden Ansprüche, wobei Abzüge der Anreicherungsstufe zu Heizzwecken an die Vorheizung (36) weitergeleitet werden.

10. Metallurgische Anlage, umfassend:
eine Hochofenanlage (16) zur Herstellung von Roheisen, wobei die Hochofenanlage metallurgisches Gas erzeugt, das Gichtgas (B1) einschließt;
eine Direktreduktionsanlage (14), umfassend einen Direktreduktionsofen (20), der dafür konfiguriert ist, direkt reduzierte Eisenprodukte aus Eisenerz herzustellen, und einen Reformofen oder eine Heizungsvorrichtung (22) zum Erzeugen von Reduktionsgas, das in den Direktreduktionsofen eingebracht wird, wobei der Direktreduktionsofen ein Gichtgas (D1) erzeugt;
eine erste Rohrleitung zum Führen eines ersten Stroms (B3) des metallurgischen Gases zu der Direktreduktionsanlage zur Verwendung in dieser als Brenngas in dem Reformofen oder der Heizungsvorrichtung;
eine zweite Rohrleitung zum Führen eines ersten Stroms (D4) von Gichtgas von dem Direktreduktionsofen zu einer Anreicherungsstufe, die zur Anreicherung in Reduktionsspezies konfiguriert ist, und eine dritte Rohrleitung zum Führen des resultierenden angereicherten Stroms (S2) von der Anreicherungsstufe zu der Hochofenanlage, um als Prozessgas verwendet zu werden.

11. Metallurgische Anlage nach Anspruch 10, umfassend Mittel zum Einspritzen des angereicherten Stroms (S2) in den Hochofen über Winddüsen oder direkt in einen Schachtbereich.

12. Metallurgische Anlage nach Anspruch 10 oder 11, wobei der erste Strom (D4) von Gichtgas aus dem Direktreduktionsofen mit Kohlenwasserstoffgas stromaufwärts der Anreicherungsstufe gemischt wird, um einen Synthesegasstrom (S1) zu bilden; vorzugsweise wobei der Synthesegasstrom durch einen Wärmetauscher geführt wird, um von dem angereicherten Strom (S2), der aus der Anreicherungsstufe austritt, aufgeheizt zu werden.

13. Metallurgische Anlage nach einem der Ansprüche 10 bis 12, wobei der erste Strom (B3) des metallurgischen Gases in einer Vorheizung (36) aufgeheizt wird, bevor er in dem Reformofen oder der Heizungsvorrichtung verbrannt wird; und/oder wobei ein zweiter Strom (B2) des metallurgischen Gases als Brenngas in der Anreicherungsstufe verwendet wird; und/oder wobei ein dritter Strom (B5) des metallurgischen Gases in der Vorheizung (36) verbrannt wird.

14. Metallurgische Anlage nach einem der Ansprüche 10 bis 13, wobei die Direktreduktionsanlage derart konfiguriert ist, dass ein zweiter Strom von Gichtgas in dem Reformofen oder der Heizungsvorrichtung behandelt wird, bevor er in dem Ofen recycelt wird, und ein dritter Strom von Gichtgas in dem Reformofen oder der Heizungsvorrichtung verbrannt wird.

15. Metallurgische Anlage nach einem der Ansprüche 10 bis 14, wobei die Anreicherungsstufe Reformmittel einschließt, die vorzugsweise dafür konfiguriert sind, trockene oder nasse Reformreaktionen zu betreiben, und die insbesondere dafür konfiguriert sind, den ersten Strom (D4) mit Reduktionsspezies durch Reformreaktionen mit Kohlenwasserstoff anzureichern, nämlich durch Erhöhen des H2- und CO-Gehalts.

## Revendications

1. Procédé de production de produits contenant du fer, comprenant :
faire fonctionner une installation de haut fourneau (12) pour produire de la fonte liquide à partir de matériau de charge de haut fourneau, moyennant quoi un gaz métallurgique comprenant le gaz de gueulard (B1) est généré ;
faire fonctionner une installation de réduction directe (14) pour produire des produits de fer préréduit à partir de minerai de fer chargé dans le haut d'un four de réduction directe (20), un flux de gaz réducteur (D5) étant introduit dans ledit four de réduction directe, ladite installation de réduction directe comprenant un reformeur ou un dispositif de chauffage (22) à partir duquel ledit flux de gaz réducteur (D5) est évacué, moyennant quoi un gaz de gueulard (D1) est généré par ledit four de réduction directe ;
dans lequel un premier flux (D4) de gaz de gueulard d'installation de réduction directe est traité dans un étage d'enrichissement (30; 42, 40) conçu pour l'enrichissement en espèces réductrices gazeuses, et acheminé vers ladite installation de haut fourneau pour y être utilisé comme gaz réducteur ; et
dans lequel un premier flux dudit gaz métallurgique (B3/B6) est acheminé vers ledit reformeur ou dispositif de chauffage de ladite installation de réduction directe pour y être utilisé comme gaz combustible.

2. Procédé selon la revendication 1, dans lequel un deuxième flux (B2) dudit gaz métallurgique est utilisé comme gaz combustible dans ledit étage d'enrichissement.

3. Procédé selon la revendication 1 ou 2, dans lequel ledit premier flux (B3) de gaz métallurgique est réchauffé dans un préchauffeur (36) en amont dudit reformeur ou dispositif de chauffage (22), et de préférence dans lequel un troisième flux (B5) dudit gaz métallurgique est brûlé dans ledit préchauffeur.

4. Procédé selon l'une quelconque des revendications précédentes, dans lequel
le flux enrichi utilisé comme gaz réducteur dans ledit haut fourneau est injecté par des tuyères ou directement dans une zone de cuve ; et/ou
un deuxième flux de gaz de gueulard (D2) dudit four de réduction directe est alimenté audit reformeur ou dispositif de chauffage (22), avec du gaz d'hydrocarbures, pour former ledit flux de gaz réducteur (D5) introduit dans ledit four de réduction directe, et/ou dans lequel un troisième flux de gaz de gueulard (D3) dudit four de réduction directe est utilisé comme gaz combustible dans ledit reformeur ou dispositif de chauffage.

5. Procédé selon l'une quelconque des revendications précédentes, dans lequel ledit premier flux (D4) de gaz de gueulard de four de réduction directe est combiné avec du gaz d'hydrocarbures en amont dudit étage d'enrichissement pour former un flux de gaz de synthèse (S1), qui est alimenté audit étage d'enrichissement, le flux de gaz de synthèse de sortie (S2) de celui-ci étant introduit dans ledit haut fourneau, l'étage d'enrichissement comportant de préférence un moyen de reformage, de préférence dans lequel ledit flux d'hydrocarbures combiné audit flux de gaz de gueulard de réduction directe (D4) comprend du gaz de cokerie, plus préférablement dans lequel ledit flux de gaz de synthèse (S1) comprend 45 à 55 % en volume de H2, 15 à 25 % en volume de CO et 7 à 15 % en volume de CH4 ; et ledit flux de sortie (S2) comprend plus de 55 % en volume de H2 et plus de 25 % en volume de CO.

6. Procédé selon l'une quelconque des revendications précédentes, dans lequel ledit préchauffage dudit flux de gaz de synthèse (S1) est réalisé par échange thermique avec le flux de gaz de synthèse de sortie en aval dudit étage d'enrichissement ; et/ou
dans lequel ledit étage d'enrichissement est conçu pour réaliser des réactions de reformage, notamment un reformage à sec ou par voie humide ; et/ou
dans lequel ledit étage d'enrichissement comprend un reformeur avec un système intégré de récupération de chaleur, et un quatrième flux dudit gaz métallurgique, éventuellement avec un flux de gaz de tête d'installation de réduction directe, est alimenté au système de récupération de chaleur, éventuellement avec un flux d'hydrogène supplémentaire ;
de préférence dans lequel un réchauffeur est associé audit étage de reformage ; et dans lequel ledit quatrième flux de gaz métallurgique est préchauffé dans ledit réchauffeur, une partie de celui-ci étant éventuellement brûlée dans ledit réchauffeur.

7. Procédé selon l'une quelconque des revendications précédentes, dans lequel un flux riche en oxygène est alimenté audit reformeur ou dispositif de chauffage pour la combustion ; et/ou dans lequel ledit reformeur (22) comprend un système intégré de récupération de chaleur alimenté avec un gaz de haut fourneau.

8. Procédé selon l'une quelconque des revendications précédentes, dans lequel ledit gaz métallurgique est constitué de gaz de gueulard ; ou de gaz de gueulard mélangé à un autre gaz contenant du CO provenant de l'installation de haut fourneau, en particulier du gaz de cokerie ou du gaz à convertisseur d'oxygène.

9. Procédé selon l'une quelconque des revendications précédentes, dans lequel les fumées dudit étage d'enrichissement sont acheminées vers le préchauffeur (36) à des fins de chauffage.

10. Installation métallurgique comprenant :
une installation de haut fourneau (16) pour produire de la fonte brute, ladite installation de haut fourneau générant du gaz métallurgique comprenant du gaz de gueulard (B1) ;
une installation de réduction directe (14) comprenant un four de réduction directe (20) conçu pour produire des produits de fer préréduit à partir de minerai de fer et un reformeur ou un dispositif de chauffage (22) pour générer un gaz réducteur introduit dans ledit four de réduction directe, ledit four de réduction directe générant un gaz de gueulard (D1) ;
une première canalisation pour transporter un premier flux (B3) dudit gaz métallurgique vers ladite installation de réduction directe pour y être utilisé comme gaz combustible dans ledit reformeur ou dispositif de chauffage ;
une deuxième canalisation pour transporter un premier flux (D4) de gaz de gueulard depuis ledit four de réduction directe jusqu'à un étage d'enrichissement conçu pour l'enrichissement en espèces réductrices gazeuses, et une troisième canalisation pour transporter le flux enrichi résultant (S2) depuis ledit étage d'enrichissement vers ladite installation de haut fourneau pour être utilisé comme gaz de procédé.

11. Installation métallurgique selon la revendication 10, comprenant des moyens d'injection dudit flux enrichi (S2) dans ledit haut fourneau, par l'intermédiaire de tuyères ou directement dans une zone de cuve.

12. Installation métallurgique selon la revendication 10 ou 11, dans laquelle ledit premier flux (D4) de gaz de gueulard provenant dudit four de réduction directe est mélangé à du gaz d'hydrocarbures en amont dudit étage d'enrichissement pour former un flux de gaz de synthèse (S1), de préférence dans laquelle ledit flux de gaz de synthèse passe à travers un échangeur de chaleur pour être réchauffé par le flux enrichi (S2) sortant dudit étage d'enrichissement.

13. Installation métallurgique selon l'une quelconque des revendications 10 à 12, dans laquelle ledit premier flux (B3) dudit gaz métallurgique est réchauffé dans un préchauffeur (36) avant d'être brûlé dans ledit reformeur ou dispositif de chauffage ; et/ou dans laquelle un deuxième flux (B2) dudit gaz métallurgique est utilisé comme gaz combustible dans ledit étage d'enrichissement ; et/ou dans laquelle un troisième flux (B5) dudit gaz métallurgique est brûlé dans ledit préchauffeur (36).

14. Installation métallurgique selon l'une quelconque des revendications 10 à 13, dans laquelle ladite installation de réduction directe est conçue de telle sorte qu'un deuxième flux de gaz de gueulard est traité dans ledit reformeur ou dispositif de chauffage avant d'être recyclé dans le four et un troisième flux de gaz de gueulard est brûlé dans le reformeur ou le dispositif de chauffage.

15. Installation métallurgique selon l'une quelconque des revendications 10 à 14, dans laquelle ledit étage d'enrichissement comprend un moyen de reformage, de préférence conçu pour réaliser des réactions de reformage à sec ou par voie humide, et notamment conçu pour enrichir le premier flux (D4) en espèces réductrices par des réactions de reformage avec des hydrocarbures, à savoir une augmentation de la teneur en H2 et CO.
